# EUROPÄISCHE PATENTANMELDUNG

(11) **EP 1 541 029 A1**
(43) Veröffentlichungstag der Anmeldung: **15.06.2005**
(21) Anmeldenummer: 04029129.6
(22) Anmeldetag: 09.12.2004
(51) Int. Cl.: A22C 7/00

(54) **Verfahren zur Herstellung von Döner Kebab sowie eine Vorrichtung zur Durchführung des Verfahrens**

(30) Priorität: 09.12.2003 DE 10357391
(71) Anmelder: Aydin, Efendi, 63486 Bruchköbel (DE); Aydin, Kemal, 63486 Bruchköbel (DE)
(72) Erfinder: Aydin, Ali, 63486 Bruchköbel (DE)
(74) Vertreter: Panten, Kirsten

(57) **Zusammenfassung**

Die Erfindung betrifft ein Verfahren zur Herstellung von Döner Kebab sowie eine Maschine zur Durchführung des Verfahrens. Aufgabe der vorliegenden Erfindung ist es, ein maschinelles Verfahren zur Herstellung von Döner Kebab bereitzustellen, mit dessen Hilfe ein Döner Kebab hergestellt werden kann, dessen Aufbau weitestgehend dem traditionellen Aufbau entspricht. Zur Herstellung von Döner Kebab wird ein Spieß (2) verwendet, zu dessen Längsachse eine mit Fleischstreifen bestückte Platte (1) senkrecht angeordnet ist. Die Platte weist einen seitlich offenen Schlitz (11) auf, der den Spieß aufnehmen kann. Mit Hilfe einer Einrichtung zum Verschieben der Platte wird die Platte aus einer Position, in der der Schlitz frei ist, in eine Position verschoben, in der der Spieß in dem Schlitz angeordnet ist. In dieser Position wickelt sich der Fleischstreifen um den Spieß. Mit Hilfe eines Presselementes (3) wird das Fleisch fixiert, während die erste Platte zurückgezogen wird.

## Beschreibung

Die Erfindung betrifft ein Verfahren zur Herstellung von Döner Kebab nach dem Oberbegriff des Anspruchs 11 sowie eine Vorrichtung zur Durchführung des Verfahrens nach dem Oberbegriff des Anspruchs 1.

Traditionell erfolgt die Herstellung von Döner Kebab manuell, was jedoch sehr arbeits-, zeit- und kostenintensiv ist.

In der EP 86 307 246.8 wurden daher ein maschinelles Verfahren und eine Vorrichtung zur Herstellung von Döner Kebab vorgeschlagen. Die beschriebene Vorrichtung enthält eine rohrförmige Anordnung, eine erste Pressplatte, die in einem Ende der rohrförmigen Anordnung sitzt und die zumindest teilweise in der rohrförmigen Anordnung verschiebbar ist, und eine zweite Pressplatte, mit der die rohrförmige Anordnung am anderen Ende verschlossen werden kann. Zwischen die beiden Platten wird zerkleinertes Fleisch gefüllt und mit Hilfe der beiden Platten zusammengedrückt, so daß ein Fleischpaket in Form eines Döner Kebab entsteht.

Diese Vorrichtung hat jedoch den Nachteil, daß ein Formstück entsteht, dessen Aufbau nicht dem traditionellen Aufbau entspricht.

Aufgabe der vorliegenden Erfindung ist es daher, ein maschinelles Verfahren zur Herstellung von Döner Kebab bereitzustellen, mit dessen Hilfe ein Döner Kebab hergestellt werden kann und dessen Aufbau weitestgehend dem traditionellen Aufbau entspricht.

Diese Aufgabe wird durch einen Döner Kebab mit den Merkmalen des Anspruchs 1 gelöst. Weiterbildungen der Erfindung sind durch die Unteransprüche definiert.

Die Vorrichtung zur Herstellung von Döner Kebab enthält einen Spieß, senkrecht zu dessen Längsachse eine Platte oder Schaufel angeordnet ist. Die Schaufel weist einen seitlich offenen Schlitz auf, der so breit ist, dass er den Spieß aufnehmen kann. Mit Hilfe einer Einrichtung zum Verschieben der Schaufel kann die Schaufel aus einer Position, in der der Schlitz frei ist, in eine Position verschoben werden, in der der Spieß in dem Schlitz angeordnet ist. In dieser Position drückt der Spieß in der Mitte gegen einen auf der Schaufel angeordneten Fleischstreifen, so dass sich dieser um den Spieß wickelt.

Die Vorrichtung weist ferner ein Presselement mit einer Öffnung auf, die größer als der Querschnitt des Spießes ist. Das Presselement wird mit Hilfe einer Einrichtung zum Verschieben des Presselementes entlang der verlängerten Längsachse des Spießes verschoben, derart, dass das Presselement in dem Moment von oben auf den Fleischstreifen drückt, in dem das Fleisch um den Spieß gewickelt ist, die Schaufel sich aber noch unter dem Fleischstreifen befindet. Anschließend wird die Schaufel zurückgezogen. Bevorzugt handelt es sich bei dem Presselement um eine Platte. An die Öffnung in dem Presselement kann sich ein Rohr anschließen, das geeignet ist, den Spieß aufzunehmen. Mit Hilfe dieses Rohrs kann das Presselement entlang der Längsachse des Spießes verschoben werden.

Bevorzugt ist die Schaufel exzentrisch und waagerecht zwischen zwei sich drehenden Platten gelagert, die senkrecht zur Schaufel angeordnet sind. Auf diese Weise kann die Schaufel durch Drehen der rotierenden Platten aus ihrer ersten Position in die zweite verschoben werden. Besonders bevorzugt sind die rotierenden Platten rund.

Denkbar ist jedoch auch, die Schaufel zum Beispiel an Kniehebeln zu lagern oder aber auch an einer Einrichtung, die die Schaufel nur in einer Ebene vor und zurück bewegt.

Besonders bevorzugt wird die Schaufel über einen Treibriemen mindestens eines Riementriebs bewegt. Vorteilhaft ist die Schaufel mit den Ecken der dem Schlitz gegenüberliegenden Kante an zwei Treibriemen befestigt, die über zwei Räder laufen. Es kann sich bei den Treibriemen um Gliedertreibriemen, d.h. Ketten handeln, die jeweils über zwei Zahnkränze geführt sind. Denkbar sind jedoch auch Bänder auf Riemenscheiben.

Nach einer bevorzugten Ausführungsform der Erfindung ist dieser Vorrichtung ein Förderband zum Transport von Fleischplatten vorgeschaltet, wobei das Förderband so angeordnet ist, dass es eine Verlängerung der Schaufel bildet, wenn sich diese in der Position befindet, in der der Schlitz frei ist.

Besonders bevorzugt ist das Förderband einer Einrichtung zur Herstellung von Fleischstreifen nachgeschaltet. Diese Einrichtung kann zum Beispiel eine Reißwalze enthalten, die ihr zugeführte Fleischstücke zerkleinert, welche mit Hilfe mindestens eines Paars gegenläufiger Walzen die zerkleinerten Fleischstücke in Form von Platten presst. Anschließend werden die Fleischformplatten mit Hilfe einer Schneideinrichtung in Streifen geschnitten. Diese Streifen werden anschließend auf die Schaufel gefördert.

Im folgenden wird eine Ausführungsform der Erfindung anhand der beiliegenden Zeichnungen genauer beschrieben. Es zeigen:
Fig. 1 eine erfindungsgemäße Vorrichtung zur Herstellung von Döner Kebab in einer ersten Arbeitsposition,
Fig. 2 eine erfindungsgemäße Vorrichtung zur Herstellung von Döner Kebab in einer zweiten Arbeitsposition,
Fig. 3 eine Vorrichtung zur Herstellung von Fleischstreifen,
Fig. 4 eine zweite besonders bevorzugte Ausführungsform
Fig. 5 eine Gesamtansicht einer Vorrichtung zur Vorbereitung von Fleisch und zum Aufbau eines Döner-Spießes,
Fig. 6 eine Zahnwalze und einen Kammabstreifer,
Fig. 7 eine Schneideinrichtung,
Fig. 8 eine bevorzugte Ausführungsform der Schaufel,
Fig. 9 eine Wäge- und Entnahmeeinrichtung,
Fig. 10 eine Schneideinrichtung.

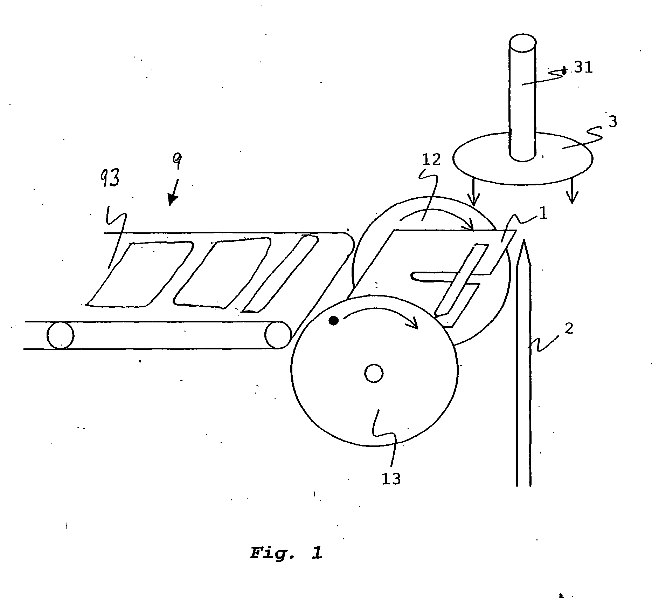

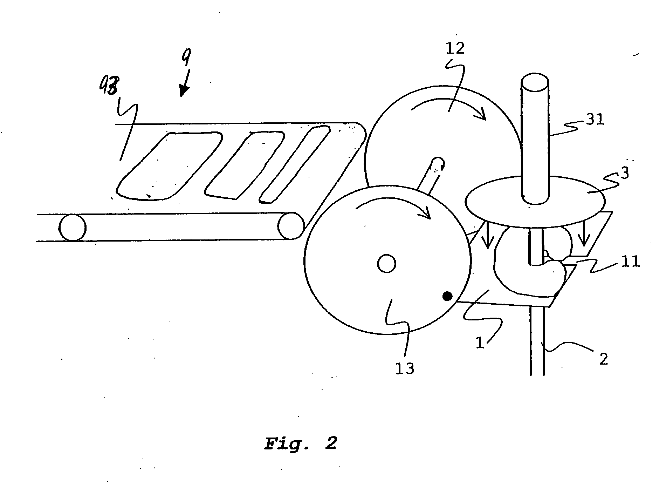

Nach den Figuren 1 und 2 weist die bevorzugte Ausführungsform der vorliegenden Erfindung eine rechteckige Schaufel 1 auf, die exzentrisch zwischen zwei sich drehenden runden Platten 12,13 angeordnet ist. Wenn sich die Platten 12,13 drehen, wird die rechteckige Schaufel 1 sowohl in horizontaler Richtung als auch in vertikaler Richtung aus einer Position, in der sie eine Verlängerung eines Förderbandes 93 bildet, in eine zweite Position verschoben. Dabei bleibt die Schaufel 1 selbst immer in horizontaler Position.

In Figur 1 befindet sich die Schaufel 1 in einer Position, in der sie die Verlängerung des Förderbandes 93 bildet. In dieser Position wird ein Fleischstreifen über das Förderband auf die rechteckige Schaufel 1 transportiert. Daraufhin wird die Schaufel 1 durch Rotation der beiden Platten 12,13, an denen sie exzentrisch gelagert ist, in eine Position verschoben, in der ein in die Schaufel 1 eingelassener Schlitz 11 einen Döner-Spieß 2 aufnimmt. Dabei wird der Fleischstreifen um den Spieß 2 gewickelt, so daß er eine gebogene Form annimmt.

Nach Fig. 2 senkt sich, sobald sich die Schaufel 1 mit dem Fleischspieß in der Position befindet, in der sich das Fleischstück um den Spieß wickelt, ein Presselement 3 auf das Fleischstück ab und presst es zwischen Schaufel und Presselement zusammen. Durch die Reibung zwischen Presselement 3 und Fleisch bleibt das Fleisch in seiner Position, während die Schaufel 1 wieder zurück in die ursprüngliche Position gebracht werden kann.

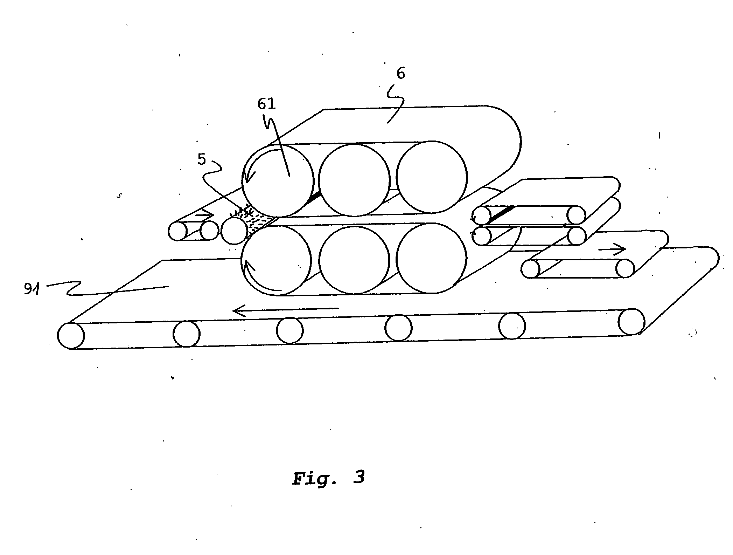

Nach Fig. 3 werden Fleischstücke über eine Reißwalze 5 geführt, die die Fleischstücke zerkleinert. Diese Fleischstücke werden anschließend einer Walzenpresse 6 zugeführt, in der die zerkleinerten Fleischstücke zu einer Fleischplatte gepresst werden. Die Fleischplatte wird ein zweites Mal durch eine engere Presse auf ein Förderband weitertransportiert und anschließend in Streifen geschnitten. Während der Fertigung eines Döner Kebabs werden zunächst breitere Streifen geschnitten, die im Herstellungsverlauf immer schmaler werden. Auf diese Weise kann die typische Form eines Döner Kebabs aufgebaut werden.

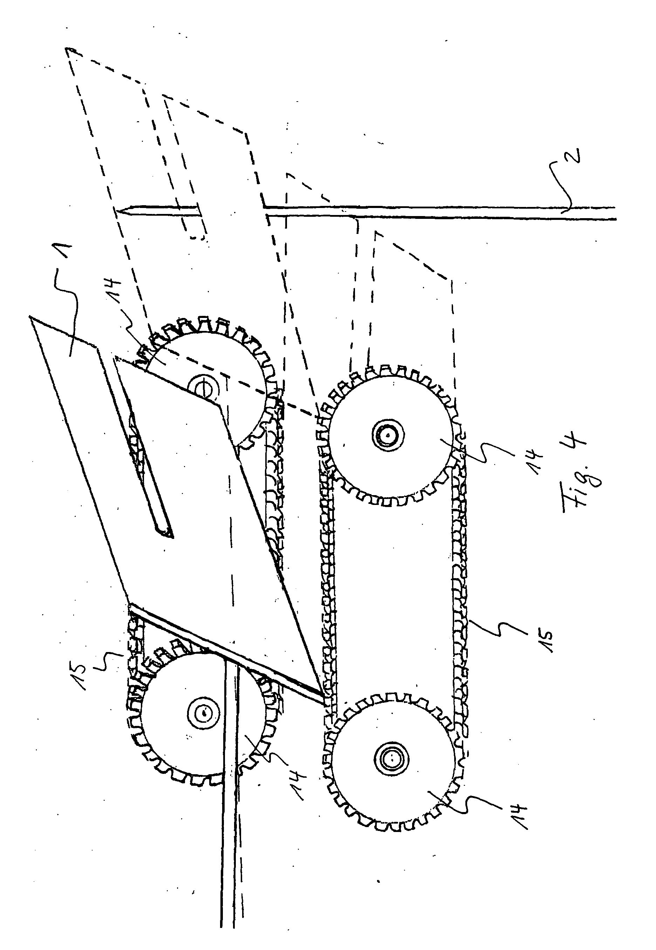

In Fig. 4 ist eine zweite besonders bevorzugte Ausführungsform der Erfindung gezeigt. In dieser Ausführungsform ist die Schaufel 1 an der dem Schlitz 11 entgegengesetzten Seite an zwei Ketten 15 befestigt, die jeweils um zwei Zahnräder 14 laufen.

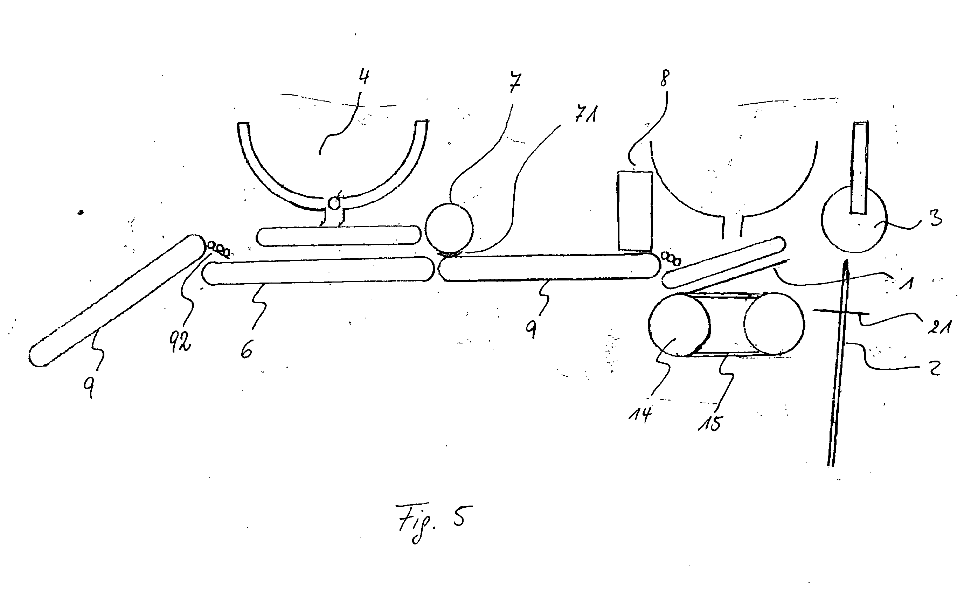

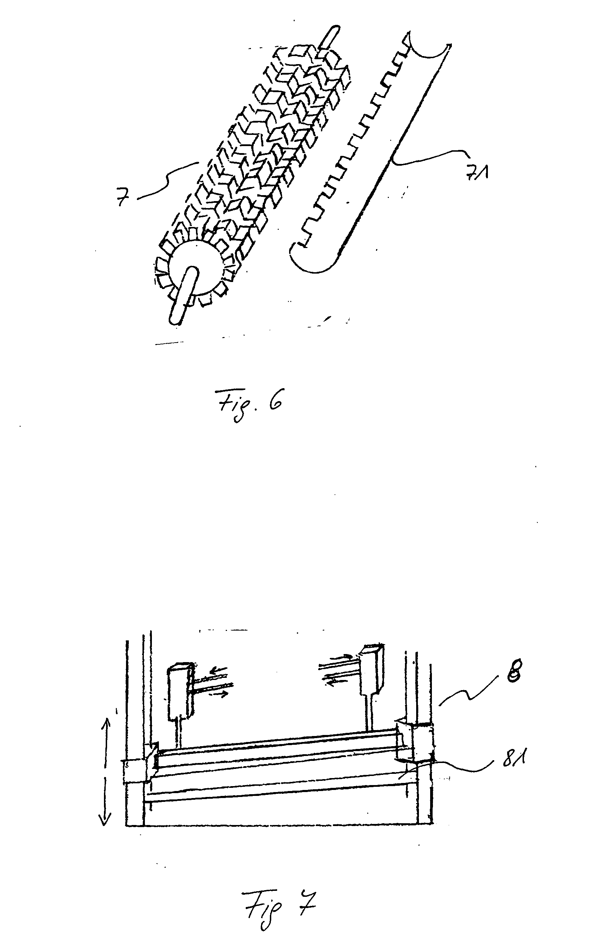

In Fig. 5 ist schematisch eine weitere Darstellung einer Gesamtanlage zur Vorbereitung des Fleisches und Herstellung eines Kebab-Spießes gemäß einer zweiten Ausführungsform gezeigt. Über einen Trichter 4 werden Fleischstücke auf ein Förderband gebracht, das das Fleisch in eine Walzenpresse 6 transportiert, in der es zu einer Fleischplatte gewünschter Dicke gepresst wird. Anschließend wird das Fleisch einer Zahnwalze 7 zugeführt, die es "walkt". Die Zahnwalze ist im Detail in Fig. 6 gezeigt. Sie ist mit einem Kammaufsatz kombiniert, der dazu dient, das Fleisch abzustreifen. Das "Walken" der Fleischplatte verbessert deren Festigkeit.

Über weitere Transportmittel wird das Fleisch dann einer Schneideinrichtung 8 zugeführt, mit deren Hilfe es in Stükke geschnitten wird, wie es bereits anhand der ersten Ausführungsform beschrieben wurde. Als Schneideinrichtung eignet sich eine sogenannte Guillotine 8, bei der das Messer 81 an Einrichtungen befestigt ist, die hydraulisch auf und ab bewegt werden können. Das zerschnittene Fleisch wird weiter auf die erste Schaufel 1 transportiert, die es dann auf den Spieß setzt. Auf dem Spieß ist eine Halteplatte befestigt, die dem Preßelement entgegenwirkt und auf der der Döner aufgebaut wird.

Nach Figur 5 kann über der Schaufel noch ein weiterer Trichter angeordnet sein, über den nach Bedarf Hackfleisch zugegeben wird.

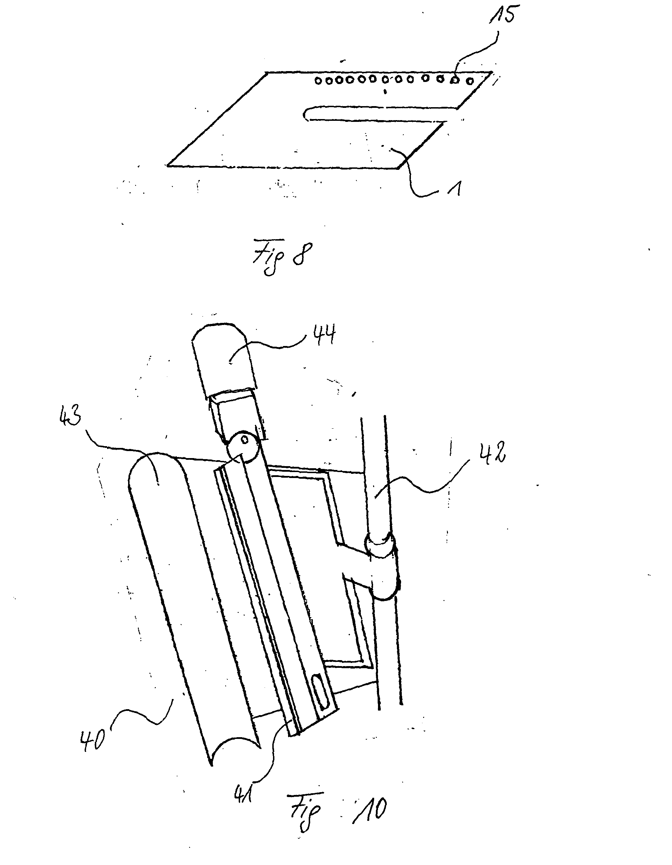

Fig. 8 zeigt eine Ausführungsform der Schaufel, in die seitlich in gleichmäßigen Abständen Löcher 15 eingelassen sind. Die Löcher 15 haben eine Größe von etwa 10 mm und dienen dazu, die Breite der Fleischstücke mit einem Rechner auszulesen. Dieser Rechner liefert Daten an die Guillotine, die die Fleischstücke dann entsprechend breit schneidet.

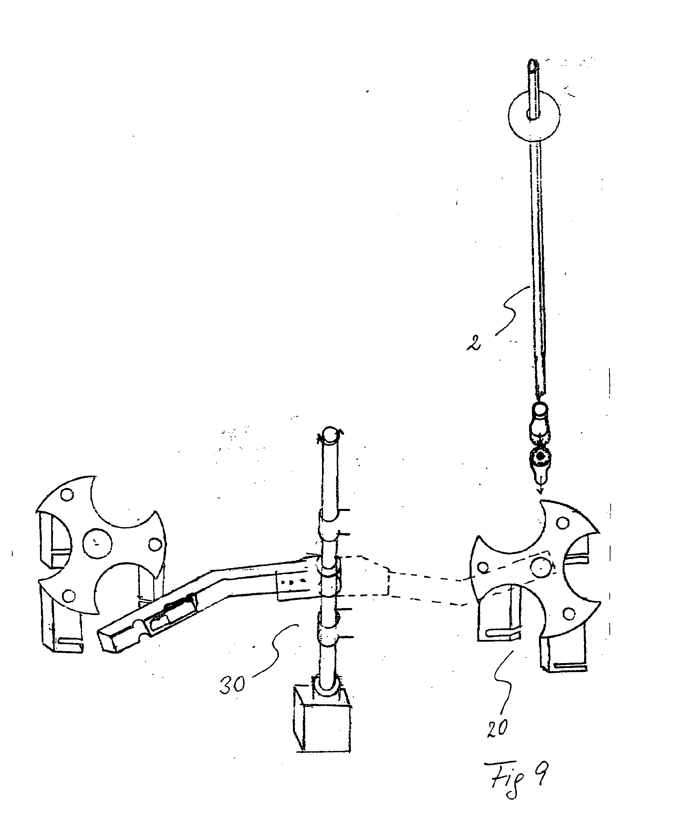

Der Spieß wird während des gesamten Füllvorgangs gewogen. In Figur 9 ist eine digitale Waage 20 dargestellt. Ist das gewünschte Spießgewicht erreicht, so wird der Spieß durch eine hydraulisch arbeitende Entnahmeeinrichtung 30 entnommen und durch einen anderen Spieß ersetzt.

Anschließend kann die Form des Fleischspießes durch einen weiteren Schneidvorgang noch verbessert werden. Ein Beispiel für eine geeignete Schneideinrichtung 40 ist in Fig. 10 dargestellt. Diese Schneideinrichtung enthält ein Messer 41, das mit Hilfe eine Motors 44 um eine Zylinderhalterung 42, auf die der Spieß gesetzt wird, im Kreis geführt wird. Der Winkel des Messers kann in einem Winkel von 0° bis 90° in Bezug auf die Zylinderhalterung verstellt werden. Um die übliche Form eines Döners zu erhalten, wird der Winkel normalerweise auf 10° bis 15° eingestellt. Zum Schutz vor Verletzungen des Bedienpersonals ist das Messer durch einen Schutzmantel aus einem magnetischen Material geschützt.

## Patentansprüche

1. Vorrichtung zur Herstellung von Döner Kebab, aufweisend
einen Spieß (6)
**gekennzeichnet durch**
eine zur Längsachse des Spießes (2) senkrecht angeordnete Schaufel (1) mit einem seitlich offenen Schlitz (11), der breiter als der Durchmesser des Spießes (2) ist,
eine Einrichtung zum Verschieben der Schaufel (1), die die Schaufel (1) aus einer Position, in der der Schlitz (11) frei ist, in eine Position verschiebt, in der der Spieß (2) in dem Schlitz (11) angeordnet ist, ein Presselement (3), das eine Öffnung aufweist, die größer als der Querschnitt des Spießes (2) ist, und eine Einrichtung zum Verschieben des Presselementes entlang der verlängerten Längsachse des Spießes (2).

2. Vorrichtung nach Anspruch 1,
**gekennzeichnet durch**
zwei sich drehende Platten (12, 13), die senkrecht zur Schaufel (1) angeordnet sind und an und zwischen denen die Schaufel (1) exzentrisch gelagert ist.

3. Vorrichtung nach Anspruch 1,
**dadurch gekennzeichnet, dass**
die Schaufel (1) an dem Treibriemen (15) mindestens eines Riementriebs (14,15) befestigt ist.

4. Vorrichtung nach einem der vorhergehenden Ansprüche,
**gekennzeichnet durch**
eine Fördereinrichtung (9) zum Transport von Fleischplatten, deren Förderband (93) so angeordnet ist, dass es eine Verlängerung der Schaufel (1) bildet, wenn sich diese in einer Position befindet, in der der Schlitz (2) frei ist.

5. Vorrichtung nach einem der vorhergehenden Ansprüche,
**gekennzeichnet durch**
eine Vorrichtung zur Herstellung von Fleischstreifen, die der Fördereinrichtung (9) vorgeschaltet ist.

6. Vorrichtung nach Anspruch 5,
**gekennzeichnet durch**
eine Reißwalze (5), die ihr zugeführte Fleischstücke zerkleinert.

7. Vorrichtung nach Anspruch 5 oder 6,
**gekennzeichnet durch**
mindestens ein Paar gegenläufige Walzen (61) zum Formpressen der zerkleinerten Fleischstücke.

8. Vorrichtung nach einem der Ansprüche 5 bis 7,
**gekennzeichnet durch**
eine Zahnwalze (7) zum "Walken" des Fleisches und einen mit der Zahnwalze kombinierten Kammaufsatz (71) zum Abstreifen des Fleisches.

9. Vorrichtung nach einem der Ansprüche 5 bis 8,
**gekennzeichnet durch**
eine Schneideinrichtung zum Zerschneiden von Fleisch oder Fleischformplatten in Streifen.

10. Vorrichtung nach einem der Ansprüche 5 bis 9,
**gekennzeichnet durch**
eine Waage (20) zum Wägen des Fleischspießes, welche über einen Rechner mit einer automatischen Entnahmeeinrichtung (30) gekoppelt ist.

11. Verfahren zur Herstellung von Döner Kebab,
**dadurch gekennzeichnet, daß**
Fleischstreifen auf eine einen nach außen hin offenen Schlitz (11) aufweisende Schaufel (1) transportiert werden und mit Hilfe dieser Schaufel um einen Spieß (2) herum gelegt werden, und
anschließend das Fleisch mit Hilfe eines Presselementes (3) zwischen Schaufel (1) und Presselement (3) zusammengedrückt wird.

12. Verfahren zur Herstellung von Döner Kebab nach Anspruch 11,
**dadurch gekennzeichnet, daß**
zerkleinerte Fleischstücke zu einer Platte gepreßt werden und anschließend mit Hilfe einer Schneideinrichtung (8) in Streifen geschnitten werden, wobei die Streifen im Verlauf des Aufbaus eines Kebab-Spießes immer breiter werden.

13. Verfahren zur Herstellung von Döner Kebab nach Anspruch 12,
**dadurch gekennzeichnet, daß**
die Fleischplatte vor dem Schneiden mit Hilfe einer Zahnwalze (7) gewalkt wird.

14. Verfahren zur Herstellung von Döner Kebab nach Anspruch 12,
**dadurch gekennzeichnet, daß**
der Spieß während des Aufbaus mit Hilfe einer Digitalwaage gewogen wird und bei Erreichen des gewünschten Gewichtes mit Hilfe einer automatischen Entnahmeeinrichtung (30) entnommen wird.
